# EUROPEAN PATENT APPLICATION

(11) **EP 4 818 797 A1**
(43) Date of publication of application: **07.10.2026**
(21) Application number: 24902435.7
(22) Date of filing: 05.11.2024
(51) Int. Cl.: G02F 1/13357, G02F 1/137

(54) **SPATIAL LIGHT MODULATOR, CONTROL METHOD, AND LIGHT-MODULATION APPARATUS**

(30) Priority: 15.12.2023 CN 202311745634
(71) Applicant: Huawei Technologies Co., Ltd., Shenzhen, Guangdong 518129 (CN)
(72) Inventor: LU, Yongheng, Shenzhen, Guangdong 518129 (CN); LI, Shiqiang, Shenzhen, Guangdong 518129 (CN); YAO, Wenjie, Shenzhen, Guangdong 518129 (CN)
(74) Representative: Goddar, Heinz J.
(86) International application number: PCT/CN2024/129938
(87) International publication number: WO 2025/124011

(57) **Abstract**

Embodiments of this application provide a spatial light modulator, a control method, and an optical modulation apparatus, and relate to the field of optical modulation technologies, to resolve a prior-art problem that a liquid crystal on silicon cannot maintain data due to a sudden power failure. The spatial light modulator includes a liquid crystal layer, a light source layer, and a first optical filter layer. A material of the liquid crystal layer includes a photosensitive liquid crystal, and the photosensitive liquid crystal can modulate incident light under irradiation of modulated light. The light source layer is disposed on one side of the liquid crystal layer and includes a plurality of light emitting pixels that are arranged in an array. The first optical filter layer is disposed between the liquid crystal layer and the light source layer, and the optical filter layer is configured to transmit the modulated light and reflect the incident light. The spatial light modulator may be used in the optical modulation apparatus.

## Description

This application claims priority to Chinese Patent Application No. 202311745634.5, filed with the China National Intellectual Property Administration on December 15, 2023 and entitled "SPATIAL LIGHT MODULATOR, CONTROL METHOD, AND OPTICAL MODULATION APPARATUS", which is incorporated herein by reference in its entirety.

### TECHNICAL FIELD

This application relates to the field of optical modulation technologies, and in particular, to a spatial light modulator, a control method, and an optical modulation apparatus.

### BACKGROUND

A spatial light modulator (Spatial Light Modulator, SLM for short) is a programmable device that spatially modulates phases, amplitudes, polarization, coherence of light, and the like, and is widely used in fields such as optical communication scheduling and switching, optical metrology, optical imaging, and laser processing. Liquid crystal on silicon (Liquid Crystal on Silicon, LCoS for short) is a common spatial light modulator, and includes a complementary metal oxide semiconductor (Complementary Metal Oxide Semiconductor, CMOS) substrate, a transparent cover, and a liquid crystal layer. The CMOS substrate and the transparent cover are disposed opposite to each other, and the liquid crystal layer is disposed between the CMOS substrate and the transparent cover. During operating, an electric field is applied to the liquid crystal layer to change characteristics of liquid crystal molecules, thereby achieving modulation of light incident to the liquid crystal layer.

However, in the liquid crystal on silicon, there is a correspondence between a modulation state of the light that is incident to the liquid crystal layer and the applied electric field, and the modulation state changes accordingly when the applied electric field disappears or changes. Consequently, the modulation state changes due to a sudden power failure, and data cannot be maintained to sustain the modulation state, such that the liquid crystal on silicon is a volatile spatial light modulator.

### SUMMARY

Embodiments of this application provide a spatial light modulator, a control method, and an optical modulation apparatus, to resolve a problem that a liquid crystal on silicon in a related technology cannot maintain data due to a sudden power failure.

To achieve the foregoing objectives, the following technical solutions are used in embodiments of this application.

According to a first aspect, an embodiment of this application provides a spatial light modulator. The spatial light modulator includes a liquid crystal layer, a light source layer, and a first optical filter layer. A material of the liquid crystal layer includes a photosensitive liquid crystal, and the photosensitive liquid crystal can modulate incident light under irradiation of modulated light. The light source layer is disposed on one side of the liquid crystal layer and includes a plurality of light emitting pixels. The first optical filter layer is disposed between the liquid crystal layer and the light source layer, and the optical filter layer is configured to transmit the modulated light and reflect the incident light.

In the spatial light modulator provided in embodiments of this application, the photosensitive liquid crystal is used at the liquid crystal layer, and the photosensitive liquid crystal can modulate incident light under an action of modulated light. In addition, after modulation is completed at the liquid crystal layer, a modulation state of the liquid crystal layer remains unchanged before the liquid crystal layer is irradiated by new modulated light, to stop power supply to the light source layer. Therefore, in comparison with a liquid crystal on silicon in a related technology, the spatial light modulator in embodiments of this application can reduce power supply time for the light source layer, that is, reduce power consumption time for controlling the liquid crystal layer, to reduce power consumption. In addition, when an unexpected power failure occurs, the liquid crystal layer can maintain a modulation state before the power failure, and has a non-volatile characteristic.

Moreover, in the spatial light modulator provided in embodiments of this application, a size of a modulation pixel is affected by the light emitting pixel. However, because the light emitting pixel only needs to emit modulated light with a fixed wavelength, and only light emitting time and light emitting intensity need to be controlled, a light emitting device and a pixel driving circuit are simple, so that a size of the light emitting pixel is small, and the size of the modulation pixel may also be small. This facilitates miniaturization design of the modulation pixel. In this design, a requirement for extremely small pixels (less than 5 micrometers) in some scenarios can be met, and more modulation pixels may also be disposed in a same area, to increase pixel density. This helps improve performance of the spatial light modulator.

In addition, in the spatial light modulator provided in embodiments of this application, a modulation frequency is affected by the light source layer, and an upper limit of a light emitting frequency of the light source layer is very high, to help improve the modulation frequency of the spatial light modulator. For example, when a micro LED is used as a light emitting pixel, a response frequency of the micro LED is gigahertz-level. Therefore, an upper limit of the modulation frequency of the spatial light modulator is gigahertz-level, and response time is nanosecond-level, which has an obvious advantage.

In some embodiments, liquid crystal molecules of the photosensitive liquid crystal are arranged into a helical structure, and the modulated light emitted by the light emitting pixels includes first modulated light and second modulated light. A pitch of the helical structure in the photosensitive liquid crystal increases under irradiation of the first modulated light, and the pitch of the helical structure in the photosensitive liquid crystal decreases under irradiation of the second modulated light.

In the spatial light modulator provided in embodiments of this application, the photosensitive liquid crystal may use a photosensitive chiral liquid crystal, for example, a photo-responsive cholesteric liquid crystal, whose liquid crystal molecules are arranged into a helical structure and whose pitch in the helical structure is adjustable under an action of the modulated light, and the incident light is modulated by modulating the pitch in the helical structure based on the modulated light.

In some embodiments, the light emitting pixel includes a first subpixel and a second subpixel that are adjacently arranged in a direction parallel to the liquid crystal layer, the first subpixel is configured to emit the first modulated light, and the second subpixel is configured to emit the second modulated light.

The first subpixel and the second subpixel each include a light emitting device and a pixel driving circuit, the light emitting device is at least one of a semiconductor laser, an organic light emitting diode, a quantum dot light emitting diode, a miniature light emitting diode, and a micro light emitting diode, and the pixel driving circuit is electrically connected to the light emitting device, and is configured to drive the light emitting device to emit light.

In the spatial light modulator provided in embodiments of this application, the light emitting pixel emits the first modulated light and the second modulated light by using two independent subpixels. This design facilitates arrangement and formation of the light emitting pixels, and facilitates light emitting control of the light emitting pixels. In addition, a plurality of different types of pixel structures may be selected for the light emitting pixels, so that the light emitting pixels have good adaptability, and can match different application scenarios and manufacturing processes.

In some embodiments, the light emitting pixel includes a light emitting device and a pixel driving circuit, and the light emitting device emits the first modulated light and the second modulated light under driving of different drive signals. The pixel driving circuit is electrically connected to the light emitting device, and is configured to drive the light emitting device to emit the first modulated light or the second modulated light. In this design, locations of the first modulated light and the second modulated light that are emitted by the light emitting pixel may overlap, and irradiation locations, on the liquid crystal layer, of the first modulated light and the second modulated light that are emitted by the same light emitting pixel also overlap, so that optical modulation are more precise. In addition, this helps reduce an area occupied by the light emitting pixels, to help reduce a pixel size of the modulation pixel, and facilitates the miniaturization design of the modulation pixel. Therefore, the spatial light modulator that uses the foregoing design can be adapted to an application scenario of extremely small pixels.

In some embodiments, the spatial light modulator further includes a second optical filter layer, and the second optical filter layer is disposed on a side that is of the liquid crystal layer and that is away from the light source layer, and is configured to transmit the incident light and reflect the modulated light. In this design, the modulated light can be prevented from being emitted together with the reflected incident light, and interference of the modulated light to the incident light can be avoided.

In some embodiments, a wavelength of the incident light ranges from 1350 nm to 1700 nm, and a wavelength of the modulated light ranges from 300 nm to 650 nm. Different wavelengths are selected for the incident light and the modulated light, and a difference between the wavelength of the incident light and the wavelength of the modulated light is large. In this design, band-pass selection effect of the first optical filter layer can be better implemented, and difficulty and costs of selecting the first optical filter layer can be reduced.

In some embodiments, the spatial light modulator further includes an alignment layer, and the alignment layer is disposed between the light source layer and the optical filter layer. The alignment layer includes a plurality of optical coupling structures, and the optical coupling structures one-to-one correspond to the light emitting pixels, and are configured to couple modulated light emitted by the light emitting pixels to a corresponding location at the liquid crystal layer. The alignment layer with optical coupling structures is disposed, to precisely control a modulation location of the modulated light at the liquid crystal layer. In addition, a divergence angle of the modulated light can be further controlled, to reduce light leakage at an edge and improve focusing efficiency.

In some embodiments, the optical coupling structure is a microlens, and the microlens protrudes from the light emitting pixels towards the liquid crystal layer. Alternatively, the optical coupling structure is an optical light guide, the optical light guide is of a columnar structure extending between the light emitting pixels and the liquid crystal layer, and a material of the optical light guide includes an optical waveguide material. Alternatively, the optical coupling structure is an isolated wall, a material of the isolated wall includes a light shielding material, and the isolated wall surrounds the light emitting pixels, to define an optical channel extending between the light emitting pixels and the liquid crystal layer.

In the spatial light modulator provided in embodiments of this application, a plurality of different types of structures may be selected for the optical coupling structures at the alignment layer, so that the optical coupling structures have good adaptability, and can match different application scenarios and manufacturing processes.

In some embodiments, the spatial light modulator further includes a polarization selection layer, the polarization selection layer is located on a side that is of the liquid crystal layer and that is away from the first optical filter layer, and a polarization orientation of the polarization selection layer is consistent with a polarization state of a modulation response of the liquid crystal layer. In this design, a function of polarization optical filtering can be implemented, to help improve efficiency of modulating the incident light by the spatial light modulator.

In some embodiments, the photosensitive liquid crystal is a photo-responsive blue-phase liquid crystal, and a lattice constant and/or a lattice orientation of the photo-responsive blue-phase liquid crystal changes under irradiation of the modulated light.

In the spatial light modulator provided in embodiments of this application, the photosensitive liquid crystal may use the photo-responsive blue-phase liquid crystal, and the incident light is modulated based on a special optical characteristic of the photo-responsive blue-phase liquid crystal and by controlling the lattice constant and/or the lattice orientation based on the modulated light.

In some embodiments, the photosensitive liquid crystal is a photo-responsive ferroelectric liquid crystal or a photo-responsive smectic liquid crystal. In the spatial light modulator provided in embodiments of this application, a plurality of different types of liquid crystals may be selected as the photosensitive liquid crystals at the liquid crystal layer, so that the photosensitive liquid crystals have good adaptability, and can match different application scenarios and manufacturing processes.

According to a second aspect, an embodiment of this application also provides an optical modulation apparatus. The optical modulation apparatus includes the spatial light modulator in embodiments of the first aspect and an incident light source, and the incident light source is configured to generate incident light irradiated to the spatial light modulator. Alternatively, the optical modulation apparatus includes the spatial light modulator in embodiments of the first aspect and an optical transmission apparatus, and the optical transmission apparatus is configured to receive incident light and project the incident light to the spatial light modulator.

Technical effect that can be achieved by the optical modulation apparatus provided in embodiments of this application is the same as technical effect that can be achieved by the spatial light modulator in any one of the foregoing embodiments. Details are not described herein again.

According to a third aspect, an embodiment of this application further provides a control method for a spatial light modulator. The spatial light modulator includes a liquid crystal layer, a light source layer, and a first optical filter layer. A material of the liquid crystal layer includes a photosensitive liquid crystal, and the photosensitive liquid crystal can modulate incident light under irradiation of modulated light. The light source layer is disposed on one side of the liquid crystal layer and includes a plurality of light emitting pixels, and the light emitting pixels are configured to generate the modulated light irradiated to the liquid crystal layer. The first optical filter layer is disposed between the liquid crystal layer and the light source layer, and the optical filter layer is configured to transmit the modulated light and reflect the incident light.

The spatial light modulator includes a plurality of modulation pixels, and the modulation pixel includes the light emitting pixel and a liquid crystal part that is at the liquid crystal layer and that corresponds to the light emitting pixel.

The control method includes:
obtaining a target modulation state and a current modulation state of the modulation pixel; and
controlling, based on a difference between the target modulation state and the current modulation state, the light emitting pixel in the modulation pixel to emit the modulated light.

In some embodiments, liquid crystal molecules of the photosensitive liquid crystal in the spatial light modulator are arranged into a helical structure.

The modulated light emitted by the light emitting pixels includes first modulated light and second modulated light. A pitch of the helical structure in the photosensitive liquid crystal increases under irradiation of the first modulated light, and the pitch of the helical structure in the photosensitive liquid crystal decreases under irradiation of the second modulated light.

In the control method, the controlling, based on the difference between the target modulation state and the current modulation state, the light emitting pixel in the modulation pixel to emit the modulated light includes:
obtaining a first pitch and a second pitch that respectively correspond to the target modulation state and the current modulation state; and
controlling, based on a difference between the first pitch and the second pitch, the light emitting pixel to emit the first modulated light or the second modulated light.

In some embodiments, the obtaining the first pitch and the second pitch that respectively correspond to the target modulation state and the current modulation state includes:
querying a lookup table based on the target modulation state and the current modulation state.

The lookup table records information about a correspondence between a modulation relationship and a pitch.

In some embodiments, the spatial light modulator is a phase-only spatial light modulator, and in the control method, the target modulation state and the current modulation state are respectively a target phase and a current phase.

### BRIEF DESCRIPTION OF DRAWINGS

FIG. 1 is a main view of a liquid crystal on silicon according to a related technology;
FIG. 2 is a sectional view of a liquid crystal on silicon according to a related technology;
FIG. 3 is a diagram of a structure of a spatial light modulator according to an embodiment of this application;
FIG. 4 is a diagram of a structure of a photo-responsive cholesteric liquid crystal according to an embodiment of this application;
FIG. 5 is a curve diagram of a relationship between a modulation amplitude and a pitch generated by a photo-responsive cholesteric liquid crystal for 1550 nm incident light according to an embodiment of this application;
FIG. 6 is a curve diagram of a relationship between a modulation phase and a pitch generated by a photo-responsive cholesteric liquid crystal for 1550 nm incident light according to an embodiment of this application;
FIG. 7 is a diagram of a forming principle of a phase pattern according to an embodiment of this application;
FIG. 8 is a diagram of a structure of a spatial light modulator according to an embodiment of this application;
FIG. 9 is a diagram of a structure of a light emitting pixel according to an embodiment of this application;
FIG. 10 is a diagram of a structure of another spatial light modulator according to an embodiment of this application;
FIG. 11 is a diagram of a structure of a light emitting pixel in still another spatial light modulator according to an embodiment of this application;
FIG. 12 is a diagram of a structure of another spatial light modulator according to an embodiment of this application;
FIG. 13 is a diagram of a structure of still another spatial light modulator according to an embodiment of this application;
FIG. 14 is a diagram of a structure of still another spatial light modulator according to an embodiment of this application;
FIG. 15 is a diagram of a structure of still another spatial light modulator according to an embodiment of this application;
FIG. 16 is a flowchart of a control method for a spatial light modulator according to an embodiment of this application;
FIG. 17 is a flowchart of another control method for a spatial light modulator according to an embodiment of this application;
FIG. 18 is a flowchart of another control method for a spatial light modulator according to an embodiment of this application; and
FIG. 19A and FIG. 19B are diagrams of structures of an optical modulation apparatus according to an embodiment of this application.

### DESCRIPTION OF EMBODIMENTS

A spatial light modulator (Spatial Light Modulator, SLM for short) is a programmable device that modulates spatial distribution such as a phase, an amplitude, polarization, and coherence of light, and is widely used in fields such as optical communication scheduling and switching, optical metrology, optical imaging, and laser processing. The spatial light modulator includes a one-dimensional or two-dimensional pixel array including a plurality of modulation pixels, and each modulation pixel may be controlled by a signal. When a beam of incident light irradiates the spatial light modulator, the modulation pixels divide the incident light into several parts, and control incident light corresponding to each modulation pixel, to change spatial distribution of the incident light.

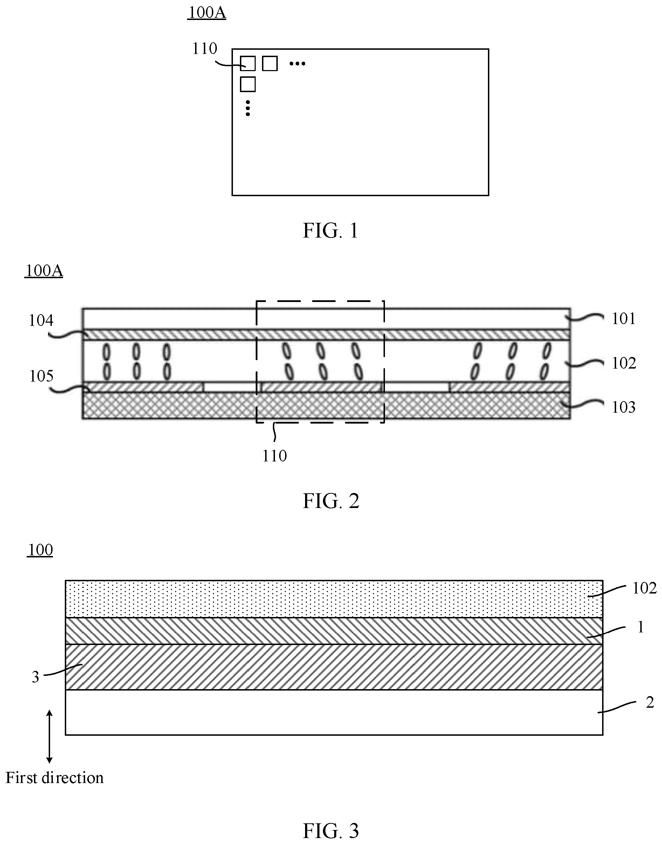

A liquid crystal on silicon (Liquid Crystal on Silicon, LCoS for short), also referred to as silicon-based liquid crystal, is a common spatial light modulator. FIG. 1 is a main view of a liquid crystal on silicon 100A according to a related technology. As shown in FIG. 1, the liquid crystal on silicon 100A includes a pixel array, and the pixel array includes a plurality of modulation pixels (Pixel) 110 arranged in an array with a plurality of rows and a plurality of columns. An orientation shown in FIG. 1 is used as an example. A row direction of the pixel array is a horizontal direction, and a column direction is a vertical direction.

FIG. 2 is a sectional view of a liquid crystal on silicon 100A according to a related technology. As shown in FIG. 2, the liquid crystal on silicon 100A includes a complementary metal oxide semiconductor (Complementary Metal Oxide Semiconductor, CMOS) substrate 103, a liquid crystal layer 102, and a transparent cover 101. The CMOS substrate 103 and the transparent cover 101 are disposed opposite to each other, and the liquid crystal layer 102 is disposed between the CMOS substrate 103 and the transparent cover 101 that are disposed opposite to each other.

The CMOS substrate 103 includes a pixel circuit and a metal reflection mirror. The pixel circuit is fabricated on a silicon wafer by using a CMOS process. After the pixel circuit is fabricated, the silicon wafer is flattened by using a grinding technology and coated with a metal layer that serves as the metal reflection mirror. The metal reflection mirror is usually made of metal aluminum and is used to reflect the incident light. The pixel circuit in the CMOS substrate 103 includes a pixel driving circuit that is disposed corresponding to the modulation pixels 110, and the pixel driving circuit includes a first electrode 105. A second electrode 104 is disposed on a side that is of the transparent cover 101 and that is close to the CMOS substrate 103.

During operating of the liquid crystal on silicon 100A with the foregoing structure, a first voltage is applied to the first electrode 105, and a second voltage is applied to the second electrode 104. When the first voltage is different from the second voltage, an electric field with a specific voltage difference may be generated between the first electrode 105 and the second electrode 104. Under an action of the electric field, characteristics of partial liquid crystal molecules, in the liquid crystal layer 102, between the first electrode 105 and the second electrode 104 change, to modulate light passing through the part of liquid crystal.

For a phase-only silicon-based liquid crystal 100A, under an action of an electric field, liquid crystal molecules, in the liquid crystal layer 102, between the first electrode 105 and the second electrode 104 deflect, and a deflection angle is related to a voltage difference between the first voltage and the second voltage. Due to birefringent effect of the liquid crystal molecules, deflection of the liquid crystal molecules generates a specific phase delay amount, and different deflection angles correspond to different phase delay amounts. Therefore, phase modulation of light may be implemented by applying different voltage differences between the first electrode 105 and the second electrode 104.

It can be learned from the foregoing descriptions of the liquid crystal on silicon 100A that the liquid crystal on silicon 100A modulates light by applying the electric field to the liquid crystal layer 102. There is a correspondence between the applied electric field and a modulation state. When the applied electric field disappears or changes, the modulation state also changes. In addition, because of an operating characteristic of the liquid crystal, the liquid crystal needs to be controlled in an alternating current power supply manner. Therefore, the pixel circuit in the liquid crystal on silicon 100A controls the liquid crystal layer 102 through polarity-inversion driving, and voltages applied to the first electrode 105 and the second electrode 104 need to be continuously refreshed in a driving process.

Based on the foregoing reasons, the liquid crystal on silicon 100A in the related technology has at least the following disadvantages:

On one hand, when a sudden power failure occurs, the liquid crystal on silicon 100A in the related technology changes a modulation state, and therefore, data cannot be maintained to maintain normal operating, and the liquid crystal on silicon 100A is a volatile spatial light modulator 100. On the other hand, to maintain the current modulation state, the liquid crystal on silicon 100A needs to keep the voltage difference applied between the first electrode 105 and the second electrode 104 unchanged in the continuous refresh driving process, which causes high power consumption of the liquid crystal on silicon 100A. In addition, to keep the voltage difference applied between the first electrode 105 and the second electrode 104 unchanged in the continuous refresh driving process, a complex pixel driving circuit needs to be disposed. However, the complex pixel driving circuit occupies a large area, and reduction of the modulation pixels 110 in the liquid crystal on silicon 100A is limited, which is not conducive to miniaturization of the modulation pixels 110, and is difficult to meet a requirement for extremely small pixels (less than 5 micrometers) in some scenarios.

In view of this, embodiments of this application provide a spatial light modulator, a control method, and an optical modulation apparatus, to resolve the foregoing problems.

The following describes the technical solutions in embodiments of this application with reference to the accompanying drawings in embodiments of this application. It is clear that the described embodiments are merely some but not all of embodiments of this application.

Terms such as "first" and "second" mentioned below in embodiments of this application are merely used for ease of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more than two.

In embodiments of this application, "up", "down", "left", and "right" are not limited to orientations of schematically placed components in relative accompanying drawings. It should be understood that these orientation terms may be relative concepts. The orientation terms are used for relative description and clarification, and may vary correspondingly based on a change in an orientation in which the component is placed in the accompanying drawings.

In embodiments of this application, unless otherwise specified in the context, in the entire specification and claims, the term "include" is interpreted as "open and inclusive", that is, "include, but not limited to". In the description of this specification, terms such as "an embodiment", "some embodiments", "an example embodiment", "an example", or "some examples" are intended to indicate that a specific feature, structure, material, or characteristic related to embodiments or examples are included in at least one embodiment or example of this application. The foregoing schematic representations of the terms do not necessarily refer to a same embodiment or example. Further, the particular feature, structure, material, or characteristic may be included in any one or more embodiments or examples in any appropriate manner.

As used in this specification, "about", "general", or "approximate" includes the stated values and the average values within an acceptable deviation range of a particular value, where the acceptable deviation range is determined by a person of ordinary skill in the art by considering an error (namely, a limitation of a measurement system) related to measurement being discussed and measurement of a specific quantity.

As used in this specification, "parallel", "perpendicular to", and "equal to" include described cases and similar cases. A range of a similar case is in an acceptable deviation range. The acceptable deviation range is determined by a person of ordinary skill in the art by considering an error (namely, a limitation of a measurement system) related to measurement being discussed and measurement of a specific quantity. For example, "parallel" includes "absolutely parallel" and "approximately parallel", and an acceptable deviation range of "approximately parallel" may be, for example, a deviation within 5°. "Perpendicular to" includes "absolutely perpendicular to" and "approximately perpendicular to", and an acceptable deviation range of "approximately perpendicular to" may also be, for example, a deviation within 5°. "Equal to" includes "absolutely equal to" and "approximately equal to". An acceptable deviation range of "approximately equal to" may be that, for example, a difference between two equal objects is less than or equal to 5% of either of the two objects.

It should be understood that, when a layer or an element is referred to as on another layer or substrate, the layer or element may be directly on the another layer or substrate, or an intermediate layer may exist between the layer or element and the another layer or substrate.

In embodiments of this application, an example implementation is described with reference to a sectional view and/or a plane diagram and/or an equivalent circuit diagram that are/is used as idealized example accompanying drawings. In the accompanying drawings, for clarity, thicknesses of layers and regions are increased. Thus, a change in a shape in the accompanying drawings due to, for example, manufacturing techniques and/or tolerances may be envisaged. Therefore, example implementations should not be construed as being limited to a shape of a region shown herein, but rather include shape deviations due to, for example, manufacturing. For example, an etching region shown as a rectangle typically has a bending characteristic. Therefore, the regions shown in the accompanying drawings are essentially examples, and their shapes are not intended to show actual shapes of regions of a device, and are not intended to limit a scope of the example implementations.

An embodiment of this application provides a spatial light modulator 100. As shown in FIG. 3, the spatial light modulator 100 includes a substrate 2, a light source layer 3, a first optical filter layer 1, and a liquid crystal layer 102 that are stacked in a first direction. The liquid crystal layer 102 is configured to receive incident light from a side away from the substrate 2, and modulate the incident light by controlling a change of characteristics of liquid crystal molecules. The modulated incident light is emitted from the liquid crystal layer 102 to a side that is of the liquid crystal layer 102 and that is away from the substrate 2.

In the spatial light modulator 100 provided in embodiments of this application, a liquid crystal material of the liquid crystal layer 102 is a photosensitive liquid crystal, and the photosensitive liquid crystal is a liquid crystal material that can change the characteristics of the liquid crystal molecules under irradiation of modulated light with a specific wavelength. Therefore, the incident light may be modulated by irradiating the modulated light to the liquid crystal layer 102.

In some embodiments, the photosensitive liquid crystal may be a photosensitive chiral liquid crystal. The photosensitive chiral liquid crystal may be formed by adding photo-responsive chiral molecules to the liquid crystal. The photo-responsive chiral molecule includes a chiral center and a photo-responsive group (also referred to as a photo switch, Photoswitch). The chiral center transfers the molecule chiral to the liquid crystal, and induces the liquid crystal molecules to form a helical structure. The photo-responsive group can perform a photoisomerization reaction under stimulation of the modulated light, and the spatial structure of the chiral molecules is changed, to change the characteristics of the helical structure, for example, a pitch and a handedness. This implements modulation of the incident light.

The following uses a photo-responsive cholesteric liquid crystal as an example to describe an operating principle of the photosensitive chiral liquid crystal. Apparently, the spatial light modulator 100 provided in embodiments of this application is not limited to the photo-responsive cholesteric liquid crystal, and may be any photosensitive chiral liquid crystal that can modulate incident light by changing characteristics of a helical structure under irradiation of modulated light, for example, a ferroelectric nematic liquid crystal, a twist grain boundary phase liquid crystal, and a smectic liquid crystal.

The cholesteric phase is a type of liquid crystal phase. The cholesteric liquid crystal (Cholesteric liquid crystal) is also referred to as a chiral nematic liquid crystal, and is a "soft" photonic crystal with a periodic helical structure.

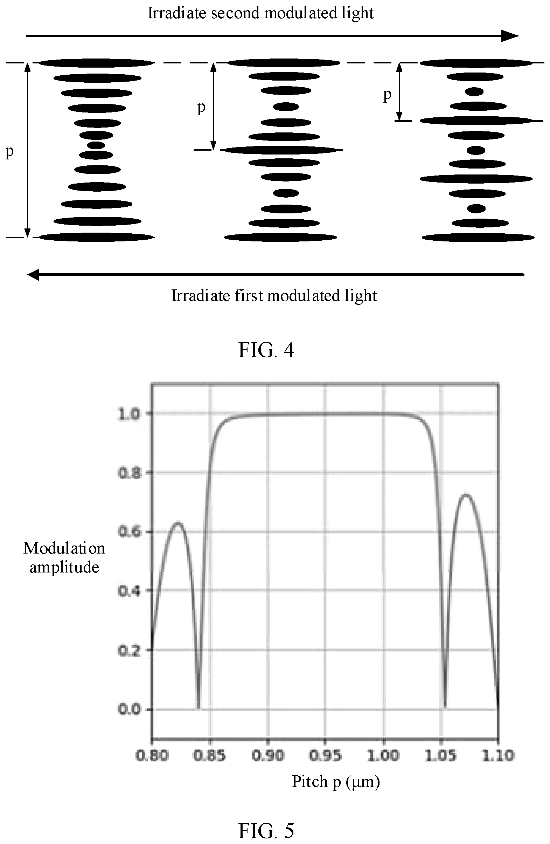

As shown in FIG. 4, liquid crystal molecules in the cholesteric liquid crystal are assembled into a layered shape, liquid crystal molecules in the layer are arranged in parallel in a specific direction, and a major axis of the molecules is parallel to a layer plane. The liquid crystal molecules between two adjacent layers rotate by a specific angle (about 15°) along a normal direction of the layer, to form the periodic helical structure. A pitch (Pitch, p for short) and a handedness (Handedness) are two important parameters indicating the helical structure of the cholesteric liquid crystal. The pitch is a layer spacing at which liquid crystal molecules rotate by 360° along a spiral axis in the helical structure. The handedness is a direction in which interlayer molecules rotate in the helical structure, and is classified into a left-handed helix and a right-handed helix.

The cholesteric liquid crystal is a self-assembled periodic helical structure similar to a one-dimensional photonic crystal, and can generate the following unique optical properties. On one hand, the periodic helical structure generates Bragg reflection, so that incident light can be selectively reflected. Only incident light in a reflection window can be reflected. On the other hand, the cholesteric liquid crystal may selectively reflect circularly polarized light in a same handedness as the cholesteric liquid crystal, that is, the cholesteric liquid crystal of the right-handed helix reflects only right-handed circularly polarized light, and the cholesteric liquid crystal of the left-handed helix reflects only left-handed circularly polarized light. In other words, circular polarization of the reflected light depends on the handedness of the helical structure in the cholesteric liquid crystal.

The photo-responsive cholesteric liquid crystal is a cholesteric liquid crystal that can induce a change of the pitch in the helical structure under stimulation of an external light source. A common method for preparing the photo-responsive cholesteric liquid crystal is adding photo-responsive chiral molecules to a nematic liquid crystal. A photoisomerization reaction occurs on the photo-responsive chiral molecules under stimulation of light with a specific wavelength, the spatial structure of chiral molecules is changed, to change the pitch of cholesteric liquid crystal.

In this specification, light that can change the pitch of the photo-responsive cholesteric liquid crystal is referred to as modulated light, and the modulated light includes first modulated light and second modulated light that have different wavelengths. As shown in FIG. 4, when the photo-responsive cholesteric liquid crystal is irradiated by the first modulated light, the pitch of the helical structure of the photo-responsive cholesteric liquid crystal increases, and stronger irradiation exposure indicates a larger increase in the pitch. When the photo-responsive cholesteric liquid crystal is irradiated by the second modulated light, the pitch of the helical structure of the photo-responsive cholesteric liquid crystal decreases, and stronger irradiation exposure indicates a larger decrease in the pitch.

For different photo-responsive cholesteric liquid crystals, the first modulated light and the second modulated light are usually different. The first modulated light and the second modulated light with proper wavelengths may be selected based on an actually used photo-responsive cholesteric liquid crystal, to control the pitch.

The photo-responsive cholesteric liquid crystal may move the reflection window of the Bragg reflection by controlling the pitch, and implement amplitude modulation on the incident light and phase modulation on the incident light by moving the reflection window.

With reference to the foregoing descriptions, it can be learned that the cholesteric liquid crystal can generate Bragg reflection. According to the Bragg reflection law λ=n×p (n is an average refractive index of a liquid crystal base, and p is a pitch), it can be learned that a center wavelength λ of a reflection window of the Bragg reflection is directly related to the pitch p of the helical structure. Therefore, the photo-responsive cholester phase liquid crystal may move the reflection window of the Bragg reflection by changing the pitch.

Reflectivity of reflected light with different wavelengths in the reflection window is different, incident light with a same wavelength can be located in different reflection windows, and reflectivity of the incident light reflected in different reflection windows is different. Therefore, the photo-responsive cholesteric liquid crystal may change the amplitude of the incident light by changing the pitch while moving the reflection window of the Bragg reflection, to implement amplitude modulation on the incident light.

In addition, spin-orbit coupling effect also exists in the cholesteric liquid crystal. Reflected light of the Bragg reflection is assigned a geometric phase related to spiral axis arrangement, and reflected light with different wavelengths in the reflection window has different reflection phases. Incident light with a same wavelength can be located in different reflection windows, and has different reflection phases when reflected in different reflection windows. Therefore, the photo-responsive cholesteric liquid crystal may change the reflection phase of the incident light by changing the pitch while moving the reflection window of the Bragg reflection, to implement phase modulation on the incident light.

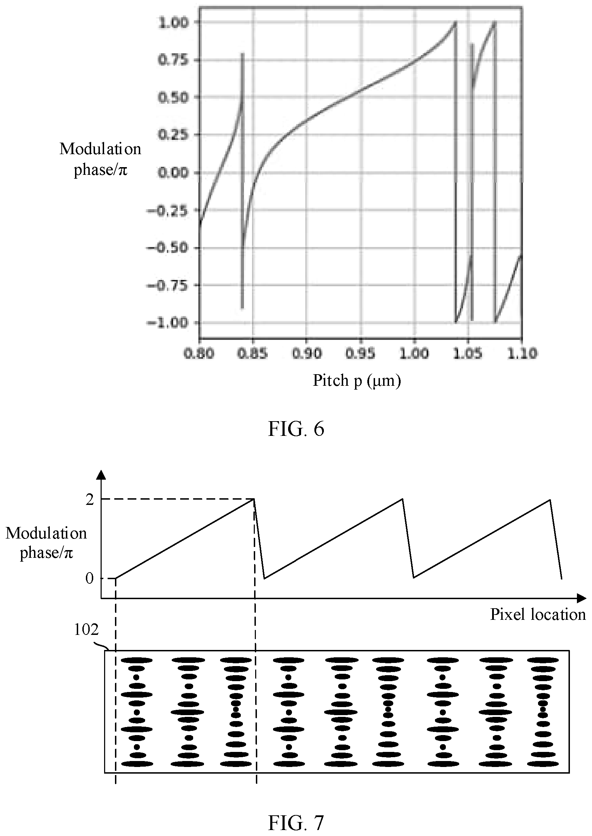

A relationship between a modulation amplitude and a modulation phase of incident light and a pitch of the photo-responsive cholesteric liquid crystal may be obtained through calculation according to a formula, or may be obtained through experiments, simulation, or the like. FIG. 5 is a curve diagram of a relationship between a modulation amplitude and a pitch generated by a photo-responsive cholesteric liquid crystal for 1550 nm incident light according to an embodiment of this application. FIG. 6 is a curve diagram of a relationship between a modulation phase and a pitch generated by a photo-responsive cholesteric liquid crystal for 1550 nm incident light according to an embodiment of this application. It should be noted that, although FIG. 5 and FIG. 6 are relationship curve diagrams generated for 1550 nm incident light, for incident light with other wavelengths, change trends are basically the same. In view of this, the relationship between the modulation amplitude, the modulation phase, and the pitch of the photo-responsive cholesteric liquid crystal for the incident light may be obtained.

It can be seen from FIG. 5 that, in the middle part of the curve of the relationship between the modulation amplitude and the pitch, the modulation amplitude is basically in a constant state as the pitch changes. In the parts on the front and rear sides of the middle part, the modulation amplitude changes as the pitch changes. In some pitch change intervals, the modulation amplitude may change from 0 to 1. In addition, a correspondence between the modulation amplitude and the pitch may be established, so that amplitude modulation may be performed based on the parts on the front and rear sides of the relationship curve.

It can be seen from the curve of the relationship between the modulation phase and the pitch shown in FIG. 6 that the modulation phase changes as the pitch changes. In some pitch change intervals, the modulation phase may change within a range of 2π. Therefore, a correspondence between the modulation phase and the pitch may be established, to change the modulation phase by modulating the pitch.

With reference to FIG. 5 and FIG. 6, it can be seen that, in the middle part of the curve of the relationship between the modulation amplitude and the pitch, the modulation amplitude is basically in a constant state as the pitch changes. In a same change process of the pitch, the modulation phase changes slowly with the pitch, and a change interval is -π to π. Therefore, decoupling of amplitude modulation and phase modulation may be implemented based on this change feature, to form a phase-only spatial light modulator 100, and implement phase modulation with an amplitude of 2π.

In the following descriptions, the solution is first described by using the phase-only spatial light modulator 100 using a photo-responsive cholesteric liquid crystal as an example. It can be learned from the foregoing descriptions that the modulated light is used to change the pitch of the photo-responsive cholesteric liquid crystal. Based on the relationship between the modulation phase and the pitch, a relationship between the modulated light and the modulation phase may be obtained as follows:

When the first modulated light is used to irradiate the photo-responsive cholesteric liquid crystal, the pitch increases, the modulation phase also increases, and stronger irradiation exposure indicates a larger increase in the pitch and the modulation phase. When the second modulated light is used to irradiate the photo-responsive cholesteric liquid crystal, the pitch decreases, the modulation phase also decreases, and stronger irradiation exposure indicates a larger decrease in the pitch and the modulation phase.

It can be seen that, under the action of the modulated light, the photo-responsive cholesteric liquid crystal can implement phase modulation on incident light by controlling the pitch.

When the spatial light modulator 100 operates, a phase pattern with specific phase distribution may be formed by loading specific phases at different locations at the liquid crystal layer 102, and different functions may be implemented by using different phase patterns. For example, as shown in FIG. 7, a function of a blazed grating may be implemented by periodically loading a phase pattern with phase distribution from 0 to 2π, and deflection of a light beam may be controlled by using the blazed grating.

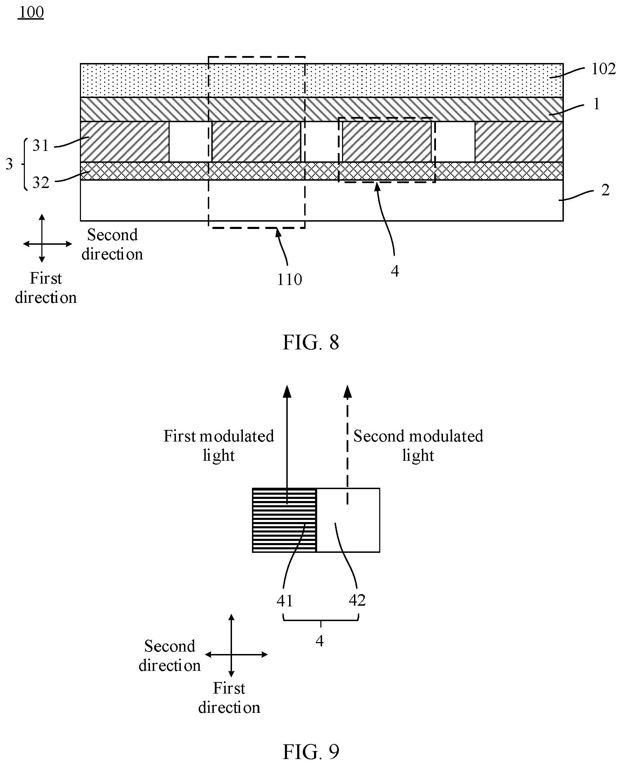

Refer to FIG. 3 and FIG. 8. In the spatial light modulator 100 provided in embodiments of this application, the light source layer 3 is disposed on a side that is of the liquid crystal layer 102 and that is close to the substrate 2. The light source layer 3 includes a plurality of light emitting pixels 4, and the plurality of light emitting pixels 4 herein may be arranged in an array, to form a one-dimensional array or a two-dimensional array.

Each light emitting pixel 4 may generate modulated light irradiated to the liquid crystal layer 102, and characteristics of liquid crystal molecules of a part, irradiated by the modulated light, in the liquid crystal layer 102 changes, to modulate the incident light. In addition, different light emitting pixels 4 correspond to different regions at the liquid crystal layer 102, and the light emitting pixel 4 and a corresponding region in the liquid crystal layer 102 jointly form a modulation pixel 110 in the spatial light modulator 100.

The spatial light modulator 100 includes a one-dimensional or two-dimensional pixel array formed by arranging a plurality of modulation pixels 110, corresponding to the light emitting pixels 4 at the light source layer 3.

Still refer to FIG. 8. The light source layer 3 may include a light emitting layer 31 and a drive circuit layer 32. The light emitting layer 31 includes a light emitting device configured to form the light emitting pixels 4. The light emitting device may be an LD (Laser Diode, semiconductor laser), an organic light emitting diode (Organic Light-Emitting Diode, OLED), a quantum dot light emitting diode (Quantum Dot Light Emitting Diodes, QLED), a Mini LED (miniature light emitting diode), a Micro LED (micro light emitting diode), or the like. A type of the light emitting device is not limited in embodiments of this application.

The drive circuit layer 32 includes a pixel driving circuit electrically connected to the light emitting device. The pixel driving circuit is configured to drive the light emitting device electrically connected to the pixel driving circuit to emit light. The pixel driving circuit and the light emitting device jointly form a light emitting pixel 4.

In some other embodiments, the light source layer 3 may further use a liquid crystal display (Liquid Crystal Display, LCD for short) apparatus, that is, the liquid crystal display apparatus provides the modulated light for the liquid crystal layer 102.

It can be learned from the foregoing descriptions that, in this embodiment, the liquid crystal layer 102 uses a photo-responsive cholesteric liquid crystal, and the photo-responsive cholesteric liquid crystal can control the pitch under irradiation of the first modulated light and the first modulated light. Correspondingly, the light emitting pixel 4 in the light source layer 3 is of a pixel structure that can emit the first modulated light and the second modulated light.

As shown in FIG. 9, in this embodiment, the light emitting pixel 4 includes a first subpixel 41 and a second subpixel 42. The first subpixel 41 and the second subpixel 42 are adjacently arranged in a second direction, and the second direction is perpendicular to the first direction. In other words, the first subpixel 41 and the second subpixel 42 are adjacently arranged in a plane parallel to the liquid crystal layer 102. The first subpixel 41 is configured to emit the first modulated light, and the second subpixel 42 is configured to emit the second modulated light. During operating, the spatial light modulator 100 may control the first subpixel 41 or the second subpixel 42 in the light emitting pixel 4 to operate, to generate the first modulated light or the second modulated light irradiated to the liquid crystal layer 102, so as to control the pitch of the photo-responsive cholesteric liquid crystal. In addition, light emitting intensity and light emitting time of the first subpixel 41 and the second subpixel 42 may be further controlled, to adjust irradiation exposure of the first modulated light or the second modulated light, so as to modulate a change amplitude of the pitch of the photo-responsive cholesteric liquid crystal.

It should be noted that, for one light emitting pixel 4, either the first modulated light or the second modulated light can be emitted at a same moment, and the first modulated light and the second modulated light cannot be simultaneously emitted. However, for the entire spatial light modulator 100, light emitting states of different light emitting pixels 4 at a same moment are independent of each other. It is possible that some light emitting pixels 4 emit first modulated light, and some light emitting pixels 4 emit second modulated light.

It can be learned from the foregoing descriptions that the spatial light modulator 100 includes both incident light and modulated light that are irradiated to the liquid crystal layer 102, the incident light is irradiated to the liquid crystal layer 102 on a side that is of the liquid crystal layer 102 and that is away from the substrate 2, and the modulated light is irradiated to the liquid crystal layer 102 on a side that is of the liquid crystal layer 102 and that is close to the substrate 2. To implement independent modulation and isolation of the incident light and the modulated light, as shown in FIG. 3 and FIG. 8, a first optical filter layer 1 is further disposed in the spatial light modulator 100 provided in embodiments of this application.

The first optical filter layer 1 is a band-pass selective optical filter layer, and has a feature of selectively transmitting light within a specific wavelength range and selectively reflecting light within another wavelength range. In this embodiment, the first optical filter layer 1 is disposed between the liquid crystal layer 102 and the light source layer 3, for example, is disposed close to a side surface that is of the liquid crystal layer 102 and that is close to the light source layer 3. The first optical filter layer 1 can efficiently reflect (for example, reflectivity is greater than 85%) the incident light, where the reflectivity reaches greater than 85%; and efficiently transmit (for example, transmittance is greater than 85%) the modulated light emitted by the light source layer 3.

To better implement band-pass selection effect of the first optical filter layer 1, and reduce difficulty in selecting the first optical filter layer 1, light with different wavelengths needs to be selected for the incident light and the modulated light, and a difference between the wavelength of the incident light and the wavelength of the modulated light needs to be as large as possible. For example, a wavelength of the incident light ranges from 1350 nm to 1700 nm, and a wavelength of the modulated light ranges from 300 nm to 650 nm.

In this embodiment, the incident light may be infrared light, and the first modulated light and the second modulated light may be ultraviolet light.

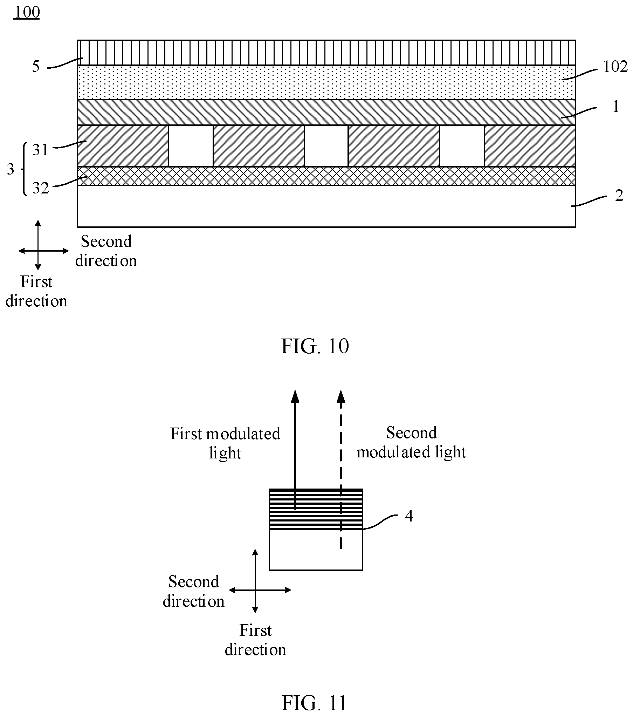

In some embodiments, as shown in FIG. 10, the spatial light modulator 100 further includes a second optical filter layer 5. The second optical filter layer 5 is disposed on a side that is of the liquid crystal layer 102 and that is away from the substrate 2, for example, is disposed closely on a side that is of the liquid crystal layer 102 and that is away from the light emitting layer 31. The second optical filter layer 5 can efficiently reflect (for example, reflectivity is greater than 85%) the modulated light, and efficiently transmit (for example, transmittance is greater than 85%) the incident light modulated by the liquid crystal layer 102. The second optical filter layer 5 is disposed, to prevent the modulated light from being emitted together with the modulated incident light. This helps improve modulation effect and optical performance of the spatial light modulator 100.

Still refer to FIG. 3, FIG. 8, and FIG. 10. The spatial light modulator 100 provided in embodiments of this application further includes the substrate 2. The substrate 2 is disposed on a side that is of the light source layer 3 and that is away from the liquid crystal layer 102, is of a plate structure perpendicular to the first direction, and is configured to carry another structure above the light source layer 3 and dissipate heat. For example, the substrate 2 may be a ceramic substrate 2 like aluminum oxide or aluminum nitride.

The spatial light modulator 100 with the foregoing structure includes the liquid crystal layer 102 and the light source layer 3. The liquid crystal layer 102 uses a photo-responsive cholesteric liquid crystal, and the light source layer 3 may generate modulated light acting on the photo-responsive cholesteric liquid crystal. The liquid crystal layer 102 may implement a phase modulation function of incident light under irradiation of the modulated light. Light emitting of the light emitting pixels 4 at the light source layer 3 is controlled, a phase pattern with specific phase distribution may be formed at the liquid crystal layer 102, that is, a phase programming function is implemented. The spatial light modulator 100 may implement different functions by loading different phase patterns.

Because the liquid crystal layer 102 uses a photo-responsive cholesteric liquid crystal, after the phase pattern is loaded, the phase pattern remains unchanged before the new modulated light is irradiated, to stop power supply to the light source layer 3. In this design, in comparison with the liquid crystal on silicon 100A in the related technology, the spatial light modulator 100 in embodiments of this application can reduce power supply time for the light source layer 3, that is, reduce power consumption time for controlling the liquid crystal layer 102, to reduce power consumption. In addition, when an unexpected power failure occurs, the liquid crystal layer 102 can maintain a phase pattern before the power failure, remain a modulation state unchanged, and has a non-volatile characteristic.

In still another aspect, it can be learned from the foregoing descriptions that, in the liquid crystal on silicon 100A in the related technology, the modulation pixels 110 cannot be extremely small due to the complex pixel driving circuit, and it is difficult to meet a requirement for extremely small pixels (less than 5 micrometers) in some scenarios. In comparison with the related technology, in the spatial light modulator 100 provided in embodiments of this application, a size of the modulation pixel 110 is affected by the light emitting pixel 4. However, because the light emitting pixel 4 only needs to emit modulated light with a fixed wavelength, and only light emitting time and light emitting intensity need to be controlled, the light emitting device and the pixel driving circuit are simple, so that a size of the light emitting pixel 4 is small, and the size of the modulation pixel 110 may also be small. This facilitates miniaturization design of the modulation pixel 110. In this design, a requirement for extremely small pixels (less than 5 micrometers) in some scenarios can be met, and more modulation pixels 110 may also be disposed in a same area, to increase pixel density. This helps improve performance of the spatial light modulator 100.

In addition, the liquid crystal on silicon 100A in the related technology needs to control the liquid crystal layer 102 through polarity-inversion driving. However, such a driving manner restricts increase of a modulation frequency. For example, in the related technology, a modulation frequency of the liquid crystal on silicon 100A is usually about 100 Hz, and does not exceed 200 Hz. In addition, in the spatial light modulator 100 provided in embodiments of this application, the modulation frequency is affected by the light source layer 3, and an upper limit of a light emitting frequency of the light source layer 3 is very high. For example, when a micro LED is used as the light emitting pixel 4, a response frequency of the micro LED is gigahertz-level. Therefore, an upper limit of the modulation frequency of the spatial light modulator 100 is gigahertz-level, and response time is nanosecond-level, which has an obvious advantage.

An embodiment of this application also provides a diagram of a structure of another spatial light modulator 100. A difference between the spatial light modulator 100 and the spatial light modulator 100 in the foregoing embodiments lies in a light emitting pixel 4. As shown in FIG. 11, in this embodiment, a light emitting device in the light emitting pixel 4 uses a pixel structure that can be controlled to emit the first modulated light and the second modulated light with different wavelengths, for example, a stacked Micro LED light emitting chip. Different drive signals are input to the light emitting device by using the pixel driving circuit, to control the light emitting device to emit the first modulated light and the second modulated light with different wavelengths. In this design, locations of the first modulated light and the second modulated light that are emitted by the light emitting pixel 4 may overlap, and irradiation locations, on the liquid crystal layer 102, of the first modulated light and the second modulated light that are emitted by the same light emitting pixel 4 also overlap, so that optical modulation are more precise. In addition, this helps reduce an area occupied by the light emitting pixels 4, to help reduce a pixel size of the modulation pixel 110, and facilitates the miniaturization design of the modulation pixel 110. Therefore, the spatial light modulator 100 that uses the foregoing design can be adapted to an application scenario of extremely small pixels.

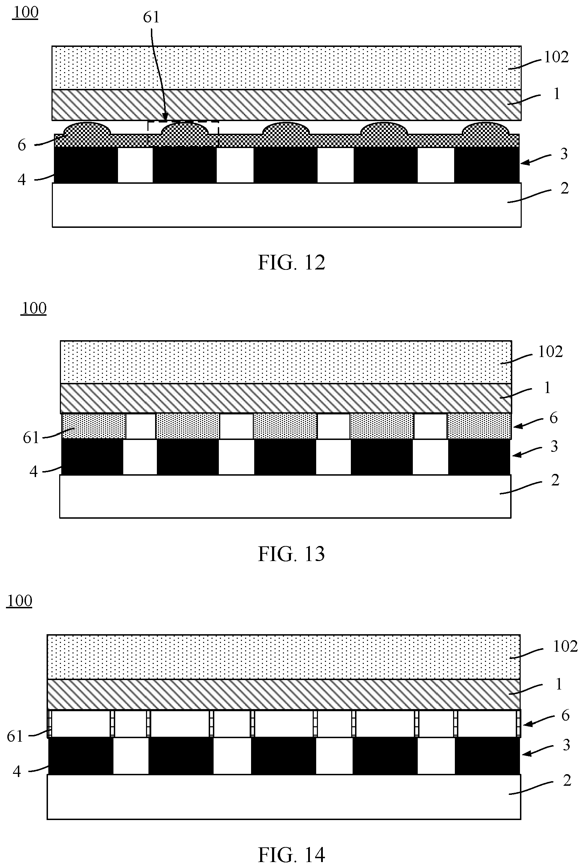

FIG. 12 is a diagram of a structure of another spatial light modulator 100 according to an embodiment of this application. As shown in FIG. 12, a difference between the spatial light modulator 100 and the spatial light modulator 100 in the foregoing embodiments lies in that an alignment layer 6 is disposed between the light source layer 3 and the first optical filter layer 1. The alignment layer 6 has optical coupling structures 61 that one-to-one correspond to the light emitting pixels 4. The optical coupling structure 61 is configured to enable modulated light emitted by the light emitting pixels 4 to be accurately coupled to a corresponding part at the liquid crystal layer 102, to precisely control a modulation location of the modulated light at the liquid crystal layer 102. In addition, the alignment layer 6 can further control a divergence angle of the modulated light, to reduce light leakage at an edge and improve focusing efficiency.

For example, as shown in FIG. 12, the alignment layer 6 includes a microlens array, the microlens array includes a plurality of microlenses arranged in an array, and the microlens is the optical coupling structure 61, disposed in the alignment layer 6, corresponding to the light emitting pixel 4. An arrangement manner of the microlenses in the microlens array is the same as an arrangement manner of the light emitting pixels 4 at the light source layer 3.

The microlens is of a lens structure protruding towards the liquid crystal layer 102. A lens surface on a side that is of the lens structure and that is close to the liquid crystal layer 102 may be a spherical surface or an aspheric surface. Focal lengths of all microlenses in the microlens array may be the same, or may be slightly different (fluctuating by less than ±10%). The liquid crystal layer 102 may be located at a focal point of the microlens, or may be located at a defocus point.

During operation, the modulated light emitted by the light emitting pixels 4 is first diverged, and then converged by using the microlens, to reduce a mode field radius at the liquid crystal layer 102. Therefore, the modulated light emitted by the light emitting pixels 4 can be accurately converged to a specified location at the liquid crystal layer 102, and the modulated light emitted by one light emitting pixel 4 can be prevented from affecting other locations at the liquid crystal layer 102, to reduce crosstalk and light leakage between the light emitting pixels 4.

For another example, as shown in FIG. 13, the optical coupling structure 61 may be an optical light guide formed by a waveguide material, and the optical light guide is of a columnar structure extending between the light emitting pixel 4 and the liquid crystal layer 102. Optical light guides corresponding to adjacent light emitting pixels 4 are disposed at intervals. In this case, the intervals may be disposed by using a gap, or a material having a refractive index difference with the optical light guide, or a light shielding material. In this design, light emitted by the light emitting pixels 4 can be limited to be transmitted in the optical light guide. Therefore, the modulated light emitted by the light emitting pixels 4 can be accurately converged to a specified location at the liquid crystal layer 102, and the modulated light emitted by one light emitting pixel 4 can be prevented from affecting other locations at the liquid crystal layer 102, to reduce crosstalk and light leakage between the light emitting pixels 4.

For still another example, as shown in FIG. 14, the optical coupling structure 61 may be an isolated wall made of a light shielding material. The light emitting pixel 4 is enclosed with the isolated wall, to form an optical channel extending between the light emitting pixel 4 and the liquid crystal layer 102. Therefore, the modulated light emitted by the light emitting pixels 4 can be limited to be transmitted in the optical channel formed by the isolated wall. In this way, the light emitted by the light emitting pixels 4 may be limited to be transmitted in the isolated wall, the modulated light emitted by the light emitting pixels 4 can be accurately converged to a specified location at the liquid crystal layer 102, and the modulated light emitted by one light emitting pixel 4 can be prevented from affecting other locations at the liquid crystal layer 102, to reduce crosstalk and light leakage between the light emitting pixels 4.

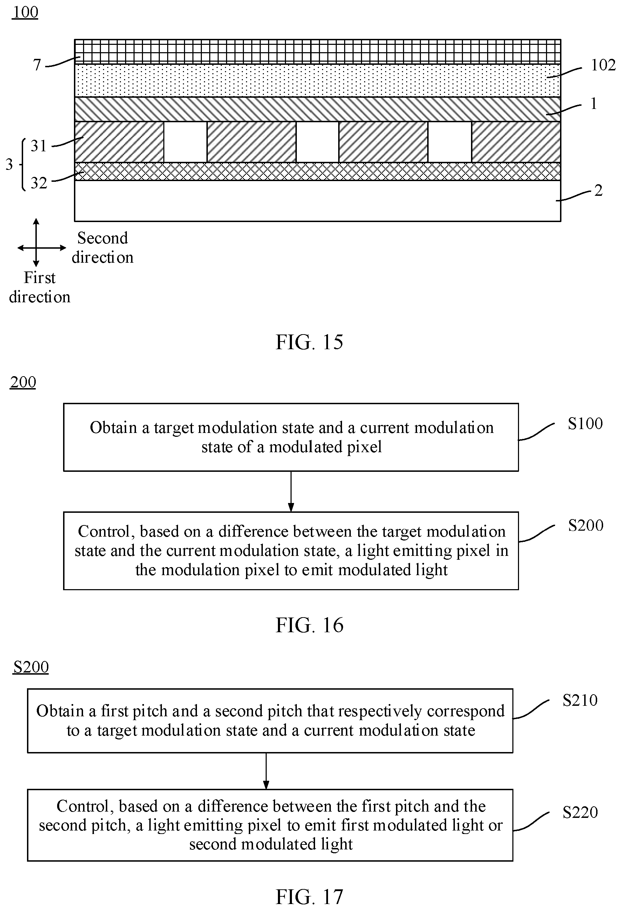

FIG. 15 is a diagram of a structure of another spatial light modulator 100 according to an embodiment of this application. As shown in FIG. 15, a difference between the spatial light modulator 100 and the spatial light modulator 100 in the foregoing embodiments lies in that a polarization selection layer 7 is disposed on a side that is of the liquid crystal layer 102 and that is away from the substrate 2. For example, the polarization selection layer 7 is directly attached to a surface of the side that is of the liquid crystal layer 102 and that is away from the substrate 2.

The polarization selection layer 7 may be a liquid crystal material, an organic material, a micro-nano structure, or the like. A polarization direction of the polarization selection layer 7 is consistent with a polarization state of a modulation response of the liquid crystal layer 102, and a function of the polarization selection layer 7 is to perform polarization filtering on incident light. The incident light may be any mixture of light in polarization states, and does not need to be specific linearly polarized light or circularly polarized light. When the incident light passes through the polarization selection layer 7, only light in a polarization state corresponding to the polarization selection layer 7 can be transmitted into the liquid crystal layer 102, and the liquid crystal layer 102 perform modulation response on the incident light in the polarization state. The incident light is reflected after being modulated by the liquid crystal layer 102, and polarization of the incident light is not modulated by the liquid crystal layer 102. The incident light reflected by the liquid crystal layer 102 may directly pass through the polarization selection layer 7, to complete modulation of the entire incident light.

In the foregoing embodiments, an example in which the photosensitive liquid crystal is a photo-responsive cholesteric liquid crystal and the spatial light modulator 100 is a phase-only spatial light modulator 100 is used to describe the solution. However, the spatial light modulator 100 provided in embodiments of this application is not limited thereto.

In some embodiments, the photosensitive liquid crystal may alternatively use any other liquid crystal material that can change characteristics of liquid crystal molecules based on modulated light, to modulate spatial distribution like a phase, an amplitude, polarization, and coherence of incident light.

For example, the photosensitive liquid crystal may be a photo-responsive blue-phase liquid crystal. Under a spiral twisting force provided by a chiral dopant, spiral twisting along a spiral axis and twisting in a direction perpendicular to the spiral axis are performed on liquid crystal molecules of the blue-phase liquid crystal (Blue-phase liquid crystal, BPLC for short), and finally, the liquid crystal molecules are assembled into a double-twisted cylinder, the double-twisted cylinder is a double helix structure different from a single helix in the cholesteric liquid crystal. Based on different arrangement manners of double-twisted cylinders, blue-phase liquid crystals may be roughly classified into a blue phase I (BPI), a blue phase II (BPII), and a blue phase III (BPIII). The BPI is of a body-center cubic structure, BPII is of a simple cubic structure, and BPIII is of an amorphous structure.

The photo-responsive blue-phase liquid crystal is a blue-phase liquid crystal obtained by doping synthesized photosensitive molecules into a blue-phase liquid crystal body, and characteristics of liquid crystal molecules can be changed under stimulation of light. For example, when the photosensitive molecule is azobenzene, isomerization of azobenzene may be used to change a pitch length of a photon band gap, to change a lattice constant. A phase transition of the phase state of the double-twisted cylinder may also be triggered, to change a lattice orientation of the photon band gap. It can be learned that, under the action of the modulated light, the photo-responsive blue-phase liquid crystal may change the lattice constant and/or the lattice orientation of the photonic crystal (blue-phase liquid crystal), to control Bragg reflection characteristics, and implement movement of a reflection center wavelength. This implements modulation of the incident light.

For another example, the photosensitive liquid crystal may alternatively be a liquid crystal material, for example, a photo-responsive ferroelectric liquid crystal or a photo-responsive smectic liquid crystal, that can change characteristics of liquid crystal molecules based on modulated light, to modulate spatial distribution like a phase, an amplitude, polarization, and coherence of incident light.

In some other embodiments, based on characteristics of modulating incident light by the photosensitive liquid crystal at the liquid crystal layer 102, the spatial light modulator 100 may be a phase-only, amplitude-only, or phase-amplitude spatial light modulator 100.

The spatial light modulator 100 in the foregoing design includes the light source layer 3 and the liquid crystal layer 102. The light source layer 3 may generate modulated light acting on the liquid crystal layer 102. The photosensitive liquid crystal is used at the liquid crystal layer 102, and the photosensitive liquid crystal can modulate incident light under an action of the modulated light. In addition, after modulation is completed at the liquid crystal layer 102, a modulation state of the liquid crystal layer 102 remains unchanged before the liquid crystal layer 102 is irradiated by new modulated light, to stop power supply to the light source layer 3. In comparison with the liquid crystal on silicon 100A in the related technology, the spatial light modulator 100 in embodiments of this application can reduce power supply time for the light source layer 3, that is, reduce power consumption time for controlling the liquid crystal layer 102, to reduce power consumption. In addition, when an unexpected power failure occurs, the liquid crystal layer 102 can maintain a modulation state before the power failure, and has a non-volatile characteristic.

Moreover, in the spatial light modulator 100 provided in embodiments of this application, a size of the modulation pixel 110 is affected by the light emitting pixel 4. However, because the light emitting pixel 4 only needs to emit modulated light with a fixed wavelength, and only light emitting time and light emitting intensity need to be controlled, the light emitting device and the pixel driving circuit are simple, so that a size of the light emitting pixel 4 is small, and the size of the modulation pixel 110 may also be small. This facilitates miniaturization design of the modulation pixel 110. In this design, a requirement for extremely small pixels (less than 5 micrometers) in some scenarios can be met, and more modulation pixels 110 may also be disposed in a same area, to increase pixel density. This helps improve performance of the spatial light modulator 100.

In addition, in the spatial light modulator 100 provided in embodiments of this application, the modulation frequency is affected by the light source layer 3, and an upper limit of a light emitting frequency of the light source layer 3 is very high. For example, when a micro LED is used as the light emitting pixel 4, a response frequency of the micro LED is gigahertz-level. Therefore, an upper limit of the modulation frequency of the spatial light modulator 100 is gigahertz-level, and response time is nanosecond-level, which has an obvious advantage.

An embodiment of this application also provides a control method for a spatial light modulator 100, used to control the spatial light modulator 100 in the foregoing embodiments. As shown in FIG. 16, the control method 200 includes the following steps.

Step S100: Obtain a target modulation state and a current modulation state of a modulation pixel.

It can be learned from the foregoing descriptions of the spatial light modulator 100 that the light emitting pixel 4 and the liquid crystal part, at the liquid crystal layer 102, corresponding to the light emitting pixel 4 jointly form a modulation pixel 110 in the spatial light modulator 100, and the spatial light modulator 100 includes a one-dimensional or two-dimensional pixel array formed by arranging a plurality of modulation pixels 110. A modulation state of the spatial light modulator 100 is a combination of modulation states of all the modulation pixels 110 in the pixel array. In a modulation state of the spatial light modulator 100, the modulation states of all the modulation pixels 110 in the pixel array are independent of each other, and modulation states of different modulation pixels 110 may be the same or may be different. In a modulation process of the spatial light modulator 100, modulation for the modulation pixels 110 in the pixel array is also independent. In other words, in the modulation process of the spatial light modulator 100, each modulation pixel 110 needs to be separately modulated based on a modulation requirement of the spatial light modulator 100. After all the modulation pixels 110 in the pixel array are modulated, the spatial light modulator 100 completes modulation.

For example, when the spatial light modulator 100 forms a target phase pattern with specific phase distribution, independent phase modulation needs to be performed on each modulation pixel 110 in the pixel array based on the target phase pattern. After phase modulation is completed on all the modulation pixels 110 in the pixel array, the spatial light modulator 100 also forms a required target phase pattern.

In step S100, the target modulation state of the modulation pixel 110 is a modulation state that the modulation pixel 110 needs to reach in a modulation task. After all the modulation pixels 110 in the pixel array reach the target modulation state, the spatial light modulator 100 implements modulation. The current modulation state of the modulation pixel 110 is a modulation state of the modulation pixel 110 before the modulation task starts.

For a modulation pixel 110 in the phase-only spatial light modulator, the target modulation state is a modulation phase that the modulation pixel 110 needs to reach in a modulation task, and the current modulation state is a modulation phase of the modulation pixel 110 before the modulation task starts. For a modulation pixel 110 in the amplitude-only spatial light modulator 100, the target modulation state is a modulation amplitude that the modulation pixel 110 needs to reach in a modulation task, and the current modulation state is a modulation amplitude of the modulation pixel 110 before the modulation task starts.

The target modulation state of the modulation pixel 110 may be directly obtained from related parameters of the modulation task of the spatial light modulator 100.

The current modulation state of the modulation pixel 110 may be obtained through memory storage of the spatial light modulator 100. In other words, during operating, the spatial light modulator 100 records and updates a modulation state of each modulation pixel 110 in the pixel array, so that the current modulation state can be directly read when the current modulation state needs to be obtained.

The current modulation state of the modulation pixel 110 may alternatively be obtained through optical measurement.

Step S200: Control, based on a difference between the target modulation state and the current modulation state, a light emitting pixel in the modulation pixel to emit modulated light.

The target modulation state and the current modulation state of the modulation pixel 110 may be obtained in step S100. Based on the difference between the target modulation state and the current modulation state, the light emitting pixel 4 in the modulation pixel 110 may be controlled to emit the modulated light. Under irradiation of the modulated light, characteristics of liquid crystal molecules in a liquid crystal part in the modulation pixel 110 can be changed, to switch the modulation pixel 110 from the current modulation state to the target modulation state, and complete the modulation task of the modulation pixel 110. In the modulation process of the modulation pixel 110, time for switching between the target modulation state and the current modulation state may be further controlled by controlling light emitting time and light emitting intensity of the light emitting pixel 4. After the modulation pixel 110 completes the modulation task, the light emitting pixel 4 may be controlled to stop operating, and the liquid crystal part in the modulation pixel 110 keeps a switched modulation state until the liquid crystal part is irradiated by new modulated light.

After all the modulation pixels 110 in the pixel array are switched to the target modulation state, the spatial light modulator 100 completes the modulation task.

When the photosensitive liquid crystal is a photo-responsive cholesteric liquid crystal, liquid crystal molecules in the photo-responsive cholesteric liquid crystal are arranged into a helical structure, and a pitch may be increased and decreased under irradiation of first modulated light and second modulated light. In view of this, as shown in FIG. 17, S200 may include the following step.

Step S210: Obtain a first pitch and a second pitch that respectively correspond to the target modulation state and the current modulation state.

It can be learned from the foregoing descriptions that a relationship between a modulation amplitude and a modulation phase of incident light and a pitch of the photo-responsive cholesteric liquid crystal may be obtained through calculation according to a formula, or may be obtained through experiments, simulation, or the like. Therefore, the first pitch and the second pitch that respectively correspond to the target modulation status and the current modulation status may be obtained based on the target modulation status and the current modulation status.

In some embodiments, step S210 may include:
querying a lookup table based on the target modulation state and the current modulation state, where the lookup table (look up table, LUT for short) records information about a correspondence between a modulation relationship and a pitch.

Step S220: Control, based on a difference between the first pitch and the second pitch, the light emitting pixel to emit the first modulated light or the second modulated light.

After the first pitch and the second pitch are obtained in step S210, the difference between the first pitch and the second pitch may be calculated. When the difference is greater than 0, it indicates that the pitch needs to be controlled to increase, and therefore, the light emitting pixel 4 may be controlled to emit the first modulated light. When the difference is less than 0, it indicates that the pitch needs to be controlled to decrease, and therefore, the light emitting pixel 4 may be controlled to emit the second modulated light.

The following describes the control method 200 by using an example in which the spatial light modulator 100 using a photo-responsive cholesteric liquid crystal performs phase modulation.

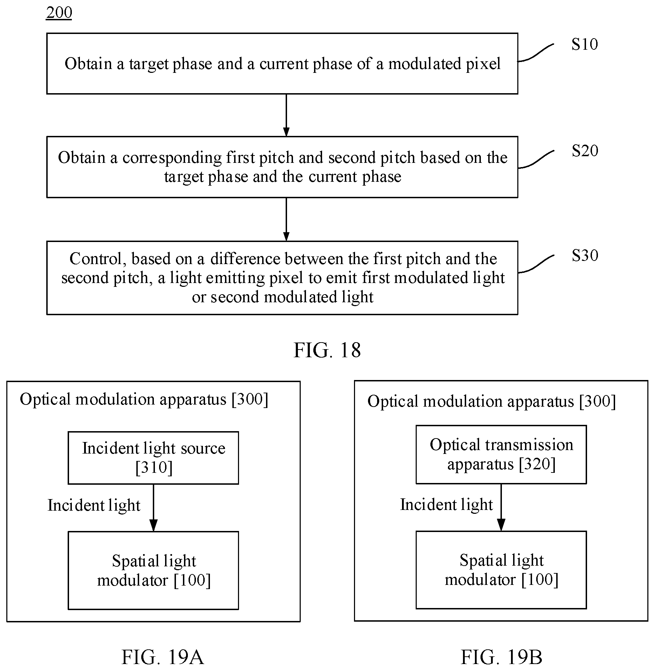

As shown in FIG. 18, the control method 200 may include the following steps.

Step S10: Obtain a target phase and a current phase of a modulation pixel.

The target phase _1 of the modulation pixel 110 is a phase that the modulation pixel 110 needs to reach in a phase modulation process, and the target phase _1 may be directly obtained from a target phase pattern. After phases of all modulation pixels 110 are modulated to the target phase_1, the target phase pattern that meets a modulation requirement may be formed.

The current phase_2 of the modulation pixel 110 is an actual phase of the modulation pixel 110 before modulation starts. The phase may be obtained based on storage information of the spatial light modulator 100. In other words, the spatial light modulator 100 records and updates the phase of the modulation pixel 110 at any time during operating, to obtain the current phase of the modulation pixel 110.

The current phase_2 of the modulation pixel 110 may alternatively be obtained through optical measurement or the like.

Step S20: Obtain a corresponding first pitch and second pitch based on the target phase and the current phase.

It can be learned from the foregoing descriptions that a correspondence between a modulation phase of incident light and a pitch of the photo-responsive cholesteric liquid crystal may be obtained through calculation according to a formula, or may be obtained through experiments, simulation, or the like. Therefore, after the target phase_1 and the current phase_2 are obtained in step S10, the first pitch P_1 and the second pitch P_2 that respectively correspond to the target phase_1 and the current phase_2 may be obtained.

In this embodiment, before modulation starts, for incident light with a possible wavelength, a curve of a relationship between the pitch and the modulation phase is calibrated through calculation simulation and pre-experiment, and the lookup table for recording the correspondence between the modulation phase and the pitch is formed. During modulation, the first pitch P_1 and the second pitch P_2 that correspond to the target phase_1 and the current phase_2 may be obtained based on the wavelength of the incident light by querying the lookup table.

Step S30: Control, based on a difference between the first pitch and the second pitch, the light emitting pixel to emit the first modulated light or the second modulated light.

After the first pitch P_1 and the second pitch P_2 that respectively correspond to the target phase _1 and the current phase _2 are obtained in step S20, the pitch difference Δ between the first pitch P_1 and the second pitch P_2 may be obtained, where Δ=P_1-P_2.

When the pitch difference Δ is greater than 0, it indicates that the pitch needs to be increased. It can be learned from the foregoing descriptions that the light emitting pixel 4 may be controlled to emit the first modulated light. When the pitch difference Δ is less than 0, it indicates that the pitch needs to be reduced. It can be learned from the foregoing descriptions that the light emitting pixel 4 may be controlled to emit the second modulated light. In the process of controlling light emitting, light emitting time and light emitting intensity may be further controlled, to control a change amplitude and change time in a pitch adjustment process.

When a change amount of the pitch reaches Δ, the phase of the modulation pixel 110 is switched to the target phase, and modulation is completed, to control the light source layer 3 to stop emitting light.

An embodiment of this application also provides an optical modulation apparatus. As shown in FIG. 19A, the optical modulation apparatus 300 includes the spatial light modulator 100 in the foregoing embodiments and an incident light source 310, and the incident light source 310 is configured to generate incident light irradiated to the spatial light modulator 100. As shown in FIG. 19B, in some other embodiments, the optical modulation apparatus 300 includes the spatial light modulator 100 in the foregoing embodiments and an optical transmission apparatus 320, and the optical transmission apparatus 320 is configured to receive incident light and project the incident light to the spatial light modulator 100. The optical modulation apparatus 300 may be a device used in fields such as optical communication scheduling and switching, optical metrology, optical imaging, and laser processing.

For example, the optical modulation apparatus 300 may be a wavelength selective switch (Wavelength selective switch, WSS for short) used in optical communication scheduling and switching. The wavelength selective switch includes an optical fiber array and the spatial light modulator 100. The optical fiber array is the optical transmission apparatus 320 described above. Incident light is irradiated to the spatial light modulator 100 by using the optical fiber array. The spatial light modulator 100 may implement deflection control of the incident light by modulating the incident light, to control the incident light to be emitted from a target port of the optical fiber array.

For another example, the optical modulation apparatus 300 may be a picture generation unit (Picture Generation Unit, PGU for short) used in optical imaging. The picture generation unit includes an illumination light source, the spatial light modulator 100, and a projection lens. The illumination light source is configured to provide an illumination light beam for the spatial light modulator 100. The spatial light modulator 100 modulates the illumination light beam to form imaging light that includes picture information. The imaging light is projected to a target location by using the projection lens. The illumination light source and the illumination light beam herein are the incident light source 310 and the incident light respectively.

Technical effect that can be achieved by the optical modulation apparatus 300 provided in embodiments of this application is the same as technical effect that can be achieved by the spatial light modulator 100 in any one of the foregoing embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A spatial light modulator, comprising:
a liquid crystal layer, wherein a material of the liquid crystal layer comprises a photosensitive liquid crystal, and the photosensitive liquid crystal modulates incident light under irradiation of modulated light;
a light source layer, wherein the light source layer is disposed on one side of the liquid crystal layer and comprises a plurality of light emitting pixels, and the light emitting pixels are configured to generate the modulated light irradiated to the liquid crystal layer; and
a first optical filter layer, wherein the first optical filter layer is disposed between the liquid crystal layer and the light source layer, and the optical filter layer is configured to transmit the modulated light and reflect the incident light.

2. The spatial light modulator according to claim 1, wherein liquid crystal molecules of the photosensitive liquid crystal are arranged into a helical structure;
the modulated light emitted by the light emitting pixels comprises first modulated light and second modulated light;
a pitch of the helical structure in the photosensitive liquid crystal increases under irradiation of the first modulated light; and
the pitch of the helical structure in the photosensitive liquid crystal decreases under irradiation of the second modulated light.

3. The spatial light modulator according to claim 2, wherein the light emitting pixel comprises a first subpixel and a second subpixel that are adjacently arranged in a direction parallel to the liquid crystal layer, the first subpixel is configured to emit the first modulated light, and the second subpixel is configured to emit the second modulated light;
the first subpixel and the second subpixel each comprise a light emitting device and a pixel driving circuit;
the light emitting device is at least one of a semiconductor laser, an organic light emitting diode, a quantum dot light emitting diode, a miniature light emitting diode, and a micro light emitting diode; and
the pixel driving circuit is electrically connected to the light emitting device, and is configured to drive the light emitting device to emit light.

4. The spatial light modulator according to claim 2, wherein the light emitting pixel comprises a light emitting device and a pixel driving circuit, and the light emitting device emits the first modulated light and the second modulated light under driving of different drive signals; and
the pixel driving circuit is electrically connected to the light emitting device, and is configured to drive the light emitting device to emit the first modulated light or the second modulated light.

5. The spatial light modulator according to any one of claims 1 to 4, wherein the spatial light modulator further comprises a second optical filter layer, and the second optical filter layer is disposed on a side that is of the liquid crystal layer and that is away from the light source layer, and is configured to transmit the incident light and reflect the modulated light.

6. The spatial light modulator according to any one of claims 1 to 5, wherein a wavelength of the incident light ranges from 1350 nm to 1700 nm, and a wavelength of the modulated light ranges from 300 nm to 650 nm.

7. The spatial light modulator according to claim 1, wherein the spatial light modulator further comprises an alignment layer, and the alignment layer is disposed between the light source layer and the optical filter layer; and
the alignment layer comprises a plurality of optical coupling structures, and the optical coupling structures one-to-one correspond to the light emitting pixels, and are configured to couple modulated light emitted by the light emitting pixels to a corresponding location at the liquid crystal layer.

8. The spatial light modulator according to claim 7, wherein the optical coupling structure is a microlens, and the microlens protrudes from the light emitting pixels towards the liquid crystal layer; or
the optical coupling structure is an optical light guide, the optical light guide is of a columnar structure extending between the light emitting pixels and the liquid crystal layer, and a material of the optical light guide comprises an optical waveguide material; or
the optical coupling structure is an isolated wall, a material of the isolated wall comprises a light shielding material, and the isolated wall surrounds the light emitting pixels, to define an optical channel extending between the light emitting pixels and the liquid crystal layer.

9. The spatial light modulator according to any one of claims 1 to 8, wherein the spatial light modulator further comprises a polarization selection layer, and the polarization selection layer is located on a side that is of the liquid crystal layer and that is away from the first optical filter layer; and
a polarization orientation of the polarization selection layer is consistent with a polarization state of a modulation response of the liquid crystal layer.

10. The spatial light modulator according to claim 1, wherein the photosensitive liquid crystal is a photo-responsive blue-phase liquid crystal, and a lattice constant and/or a lattice orientation of the photo-responsive blue-phase liquid crystal changes under irradiation of the modulated light.

11. The spatial light modulator according to claim 1, wherein the photosensitive liquid crystal is a photo-responsive ferroelectric liquid crystal or a photo-responsive smectic liquid crystal.

12. An optical modulation apparatus, wherein the optical modulation apparatus comprises:
the spatial light modulator according to any one of claims 1 to 11; and
an incident light source, wherein the incident light source is configured to generate incident light irradiated to the spatial light modulator; or
the optical modulation apparatus comprises:
the spatial light modulator according to any one of claims 1 to 11; and
an optical transmission apparatus, wherein the optical transmission apparatus is configured to receive incident light and project the incident light to the spatial light modulator.

13. A control method for a spatial light modulator, wherein the spatial light modulator comprises a liquid crystal layer, a light source layer, and a first optical filter layer, a material of the liquid crystal layer comprises a photosensitive liquid crystal, and the photosensitive liquid crystal is capable of modulating incident light under irradiation of modulated light;
the light source layer is disposed on one side of the liquid crystal layer and comprises a plurality of light emitting pixels, and the light emitting pixels are configured to generate the modulated light irradiated to the liquid crystal layer;
the first optical filter layer is disposed between the liquid crystal layer and the light source layer, and the optical filter layer is configured to transmit the modulated light and reflect the incident light;
the spatial light modulator comprises a plurality of modulation pixels, and the modulation pixel comprises the light emitting pixel and a liquid crystal part that is at the liquid crystal layer and that corresponds to the light emitting pixel; and
the control method comprises:
obtaining a target modulation state and a current modulation state of the modulation pixel; and
controlling, based on a difference between the target modulation state and the current modulation state, the light emitting pixel in the modulation pixel to emit the modulated light.

14. The control method according to claim 13, wherein liquid crystal molecules of the photosensitive liquid crystal in the spatial light modulator are arranged into a helical structure;
the modulated light emitted by the light emitting pixels comprises first modulated light and second modulated light;
a pitch of the helical structure in the photosensitive liquid crystal increases under irradiation of the first modulated light;
the pitch of the helical structure in the photosensitive liquid crystal decreases under irradiation of the second modulated light; and
in the control method, the controlling, based on the difference between the target modulation state and the current modulation state, the light emitting pixel in the modulation pixel to emit the modulated light comprises:
obtaining a first pitch and a second pitch that respectively correspond to the target modulation state and the current modulation state; and
controlling, based on a difference between the first pitch and the second pitch, the light emitting pixel to emit the first modulated light or the second modulated light.

15. The control method according to claim 14, wherein the obtaining the first pitch and the second pitch that respectively correspond to the target modulation state and the current modulation state comprises:
querying a lookup table based on the target modulation state and the current modulation state, wherein
the lookup table records information about a correspondence between a modulation relationship and a pitch.

16. The control method according to claim 14 or 15, wherein the spatial light modulator is a phase-only spatial light modulator, and in the control method, the target modulation state and the current modulation state are respectively a target phase and a current phase.
